Europäisches Patentamt

European Patent Office

Office européen des brevets

(11) Veröffentlichungsnummer: **0 451 445 A2**

(12) **EUROPÄISCHE PATENTANMELDUNG**

(21) Anmeldenummer: **91101112.0**

(22) Anmeldetag: **29.01.91**

(51) Int. Cl.5: **H04B 5/00, G08B 13/04**

(30) Priorität: **12.04.90 DE 4011941**

(43) Veröffentlichungstag der Anmeldung:
**16.10.91 Patentblatt 91/42**

(84) Benannte Vertragsstaaten:
**AT BE CH DE FR GB IT LI NL**

(71) Anmelder: **RICHARD HIRSCHMANN GMBH & CO.**
**Richard-Hirschmann-Strasse 19 Postfach 110**
**W-7300 Esslingen a.N.(DE)**

(72) Erfinder: **Hirrlinger, Klaus**
**Plochingerstrasse 69**
**W-7300 Esslingen a.N(DE)**

(74) Vertreter: **Stadler, Heinz, Dipl.-Ing.**
**Richard-Hirschmann-Strasse 19 Postfach 110**
**W-7300 Esslingen a.N.(DE)**

(54) Verfahren zum Kontaktlosen, induktiven Übertragen von elektrischen Energien und/oder Signalen sowie Kontaktloser, induktiver Übertrager.

(57) Bei dem Verfahren zum kontaktlosen, induktiven Übertragen sowohl elektrischer Versorgungsenergien von einer Primäreinheit zu einer Sekundäreinheit als auch von Signalen von der Sekundäreinheit zur Primäreinheit mittels eines Bandfilters wird das Bandfilter sekundärseitig periodisch kurzgeschlossen. Da-her ist es möglich, Energien oder Signale in beiden Richtungen zu übertragen, ohne daß Schalter erforderlich sind, oder sich eine Unterbrechung der Versorgungsübertragung ergibt. Ein kontaktloser, induktiver Übertrager zur Durchführung des Verfahrens ist angegeben.

Fig.1

EP 0 451 445 A2

Die Erfindung betrifft ein Verfahren zum kontaktlosen, induktiven Übertragen sowohl von elektrischen Versorgungsenergien von einer Primäreinheit zu einer Sekundäreinheit, als auch von Signalen von der Sekundäreinheit zur Primäreinheit mittels eines Bandfilters. Die Erfindung betrifft weiterhin einen kontaktlosen, induktiven Übertrager mit einem Bandfilter zum Übertragen sowohl von elektrischen Versorgungsenergien von einer Primäreinheit zu einer Sekundäreinheit als auch von Signalen von der Sekundäreinheit zur Primäreinheit.

Aus der DE-C2-30 29 543 ist ein kontaktloser, induktiver Übertrager bekannt, der die gegensinnige Übertragung von Energien und Signalen ermöglicht. Über ein erstes 2-kreisiges Bandfilter wird die elektrische Versorgungsenergie und über ein zweites 2-kreisiges Bandfilter werden Signale in Gegenrichtung übertragen. Das besondere Merkmal dieser Anordnung besteht darin, daß die Bandfilter kritisch oder überkritisch gekoppelt sind. Dadurch ist es nicht mehr nötig, die Primär- oder Sekundäreinheit in ihren Lagen zueinander konstant zu halten, so daß die Herstellungstoleranzen bei gleichartigen Übertragern relativ groß sein können bzw. eine Lageänderung in Kauf genommen werden kann. Ein weiterer Vorteil besteht darin, daß die Spannung am Sekundärkreis auch dann im wesentlichen konstant bleibt, wenn die Abstände der Primär- und Sekundärspulen in einem bestimmten Maße variieren. Obgleich sich diese Schaltungsanordnung gut bewährt hat, weist sie dennoch den Nachteil auf, daß jeweils ein Bandfilter für die Energieübertragung als auch für die Signalübertragung erforderlich ist, was zu einem erhöhten schaltungstechnischen Aufwand führt und insbesondere in bestimmten Anwendungsfällen hinsichtlich des Raumbedarfs anspruchsvoll ist.

Aus der EP-A2-316 872 ist eine Alarmgeberanordnung mit einem kontaktlosen, induktiven Übertrager bekannt, bei dem die Übertragung sowohl der elektrischen Versorgungsenergie in die eine Richtung als auch der Signale in die andere Richtung über ein einziges Bandfilter erfolgt. Dazu wird das Bandfilter in seiner Funktion von der Versorgungsenergie-Übertragung auf die Signalübertragung und umgekehrt periodisch umgeschaltet. Neben einem immer noch relativ hohen schaltungstechnischen Aufwand durch die Notwendigkeit der Verwendung elektronischer Schalter weist diese Schaltungsanordnung den Nachteil auf, daß während der Zeit, in der auf die Signalübertragung umgeschaltet ist, die Energieübertragung von der Primär- auf die Sekundärseite des Filters unterbrochen wird, so daß keine stetige, kontinuierliche Energieübertragung möglich ist.

Der Erfindung liegt daher die Aufgabe zugrunde, ein Verfahren zum kontaktlosen, induktiven Übertragen von elektrischen Versorgungsenergien

.

und Signalen anzugeben sowie einen kontaktlosen, induktiven Übertrager zu schaffen, das bzw. der hinsichtlich des Schaltungstechnischen Aufwands einfach ist und eine kontinuierliche, ununterbrochene Energieübertragung auch während der Signalübertragung ermöglicht.

Ausgehend von der aus der EP-A2-316 872 bekannten Schaltungsanordnung wird die gestellte Aufgabe erfindungsgemäß dadurch gelöst, daß das Bandfilter sekundärseitig periodisch kurzgeschlossen wird.

Durch das periodische Kurzschließen auf der Sekundärseite ergibt sich eine Art Modulation bei der Übertragung der Versorgungsenergie. Diese Modulation bewirkt primärseitig eine periodische Erhöhung bzw. Verdopplung der Spannungsamplitude.

Hinsichtlich des schaltungstechnischen Aufwandes weist das erfindungsgemäße Verfahren gegenüber herkömmlichen Verfahren den Vorteil auf, daß elektronische Schalter zur Umschaltung nicht erforderlich sind. Hinsichtlich der Funktionsweise hat das erfindungsgemäße Verfahren den Vorteil, daß die Energieübertragung von der Primär- auf die Sekundärseite des Bandfilters bzw. von der Primäreinheit auf die Sekundäreinheit durch die periodischen Kurzschlüsse praktisch nicht unterbrochen wird, so daß eine kontinuierliche Energieübertragung auch bei erfolgender Signalrückübertragung gewährleistet ist.

Gemäß einer vorteilhaften Ausgestaltung der Erfindung ist die Taktfrequenz des periodischen Kurzschließens bezüglich der Übertragungsfrequenz klein. Dadurch erfolgt durch das periodische Kurzschließen lediglich eine Modulation der mit einer größeren Übertragungsfrequenz übermittelten Versorgungsenergie, ohne daß diese dadurch wesentlich beeinflußt wird.

Besonders vorteilhaft ist es, wenn das periodische Kurzschließen mit einem unsymmetrischen oder gar stark unsymmetrischen Tastverhältnis erfolgt. Auch dadurch wird erreicht, daß die Energieübertragung von der Primär- auf die Sekundärseite des Filters durch die in Gegenrichtung verlaufende Signalübertragung mittels des periodischen Kurzschließens noch weniger beeinflußt wird.

Ausgehend von der aus der EP-A2-316 872 bekannten Schaltung wird die gestellte Aufgabe auch mittels eines kontaktlosen, induktiven Übertragers dadurch gelöst, daß die Sekundäreinheit eine Schaltungsanordnung zum periodischen Kurzschließen des Bandfilters aufweist. Diese Schaltungsanordnung kommt mit wenigen Bauteilen aus und ist einfach zu fertigen, da Umschalter, wie dies bei herkömmlichen Übertragern dieser Art erforderlich ist, nicht benötigt werden. Darüber hinaus ergibt sich keine Unterbrechung der Energieübertragung während der Signalübertragung, da diese lediglich als Modulation in Erscheinung tritt.

Gemäß einer bevorzugten Ausführungsform der Erfindung ist die Schaltungsanordnung zum periodischen Kurzschließen des Bandfilters eine Modulatorschaltung, etwa in Form eines bipolaren Transistors, aber auch eines Feldeffekttransistors. Vorzugsweise ist die Frequenz zum periodischen Kurzschließen bzw. die Modulatorfrequenz dabei klein gegenüber der Übertragungsfrequenz. Um die Energieübertragung während des periodischen Kurzschließens des Bandfilters möglichst unbeeinflußt zu lassen, ist es weiterhin vorteilhaft, mit unsymmetrischem Tastverhältnis zu arbeiten.

Eine besonders vorteilhafte Ausgestaltung des erfindungsgemäßen Übertragers besteht darin, daß der Primärkreis des Bandfilters Teil einer selbsterregenden Oszillatorschaltung in der Primäreinheit ist. Auf diese Weise wird die Schaltungsanordnung für den erfindungsgemäßen Übertrager noch weiter vereinfacht. Denn es ist in vielen Anwendungsfällen, wie zum Beispiel bei Meldern, Detektoren oder "passiven" Glasbruch-Alarmgebern nicht erforderlich, die Bandfiltereigenschaften bei kritischer bis überkritischer Kopplung voll auszunützen. In zahlreichen Anwendungsfällen, wie etwa auch bei Glasbruchmeldern oder sonstigen Detektoren, kann auf eine konstante Ausgangsspannung verzichtet werden, so daß der Primärkreis des Bandfilters Teil der selbsterregenden Oszillatorschaltung mit dem besagten Vorteil sein kann.

Besonders vorteilhaft ist es im Zusammenhang mit der letztgenannten Ausführungsform, wenn der Primärkreis für die Oszillatorschaltung frequenzbestimmend ist.

Eine Weiterbildung der vorliegenden Erfindung besteht in dem Merkmal, daß der Oszillator transiterspannungsgesteuert ist, wobei die Spannungssteuerung vorzugsweise durch Mitkopplung erfolgt. Denn bei Stromsteuerung geht die große Streuung der Stromverstärkung einzelner Transistoren in die Schleifenverstärkung ein. Bei Spannungssteuerung dagegen ist die Steilheit - sieht man einmal von den Basis- und Emitterbahnwiderständen ab - im interessierenden Bereich nur linear vom Emitterstrom abhängig.

Der erfindungsgemäße Übertager ist insbesondere im Zusammenhang mit einer Alarmgeberanordnung vorteilhaft verwendbar. Vorzugsweise umfaßt die Primäreinheit eine Energieversorgungsschaltung und/oder eine Signalauswerteschaltung, und die Sekundäreinheit einen Alarmgeber. Für Anordnungen zur Überwachung bewegbarer Fenster oder Türen ist der erfindungsgemäße Übertrager besonders geeignet, da die an Zarge und Rahmen jeweils angebrachten Bandfilterkreise einen geringen Platzbedarf haben.

Der Alarmgeber ist vorzugsweise ein Glasbruchmelder.

Gemäß einer besonders vorteilhaften Ausgestaltung insbesondere aber nicht ausschließlich bei der Verwendung des erfindungsgemäßen Übertragers im Zusammenhang mit einem Glasbruchmelder, sind die Spulen der Bandfilterkreise des Übertragers mit ihren Stirnseiten gekoppelt. Dadurch ist es möglich, statt der herkömmlichen Langlöcher in den Holzzargen oder -rahmen der Fenster oder Türen lediglich eine einfache Bohrung vorzusehen, in denen die Spulen auf einfache Weise angebracht werden können.

Die vorliegende Erfindung wird nachfolgend anhand der Zeichnungen erläutert. Es zeigen:

Fig. 1    eine schematische Darstellung für einen kontaktlosen Kabelübergang im Anwendungsfall einer Glasbruch-Meldeanordnung,

Fig. 2    eine ins einzelne gehende Schaltungsdarstellung des in Fig. 1 dargestellten kontaktlosen Kabelübergangs, und

Fig. 3    schematische Darstellung von Alarmsignalverläufen.

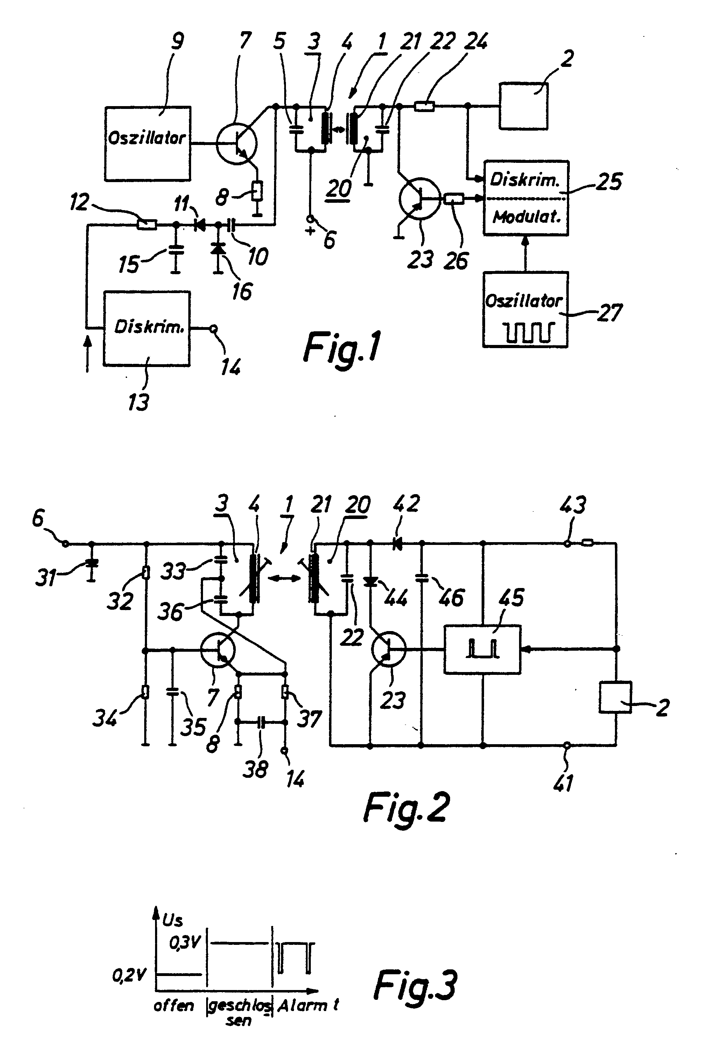

Fig. 1 zeigt am Beispiel einer Alarmgeberanordnung die Verwendung eines erfindungsgemäßen kontaktlosen, induktiven Übertragers mit einem Bandfilter 1, das die elektrische Versorgungsenergie von einer Primäreinheit auf eine Sekundäreinheit mit einem Glasbruchmelder 2, sowie vom Glasbruchmelder 2 abgegebene Signale der Sekundäreinheit auf die Primäreinheit kontaktlos überträgt. Ein primärseitiger Bandfilterkreis 3 weist eine Induktivität in Form einer Spule 4 und einen Kondensator 5 auf, die miteinander parallel geschaltet sind. Der untere gemeinsame Verbindungspunkt von Spule 4 und Kondensator 5 liegt an einer positiven Anschlußklemme 6, während der obere gemeinsame Verbindungspunkt am Kollektor eines Transistors 7 anliegt, dessen Emitter über einen Emitterwiderstand 8 mit Masse verbunden ist, und dessen Basiselektrode mit einem Oszillator 9 der Primäreinheit in Verbindung steht. Der Kollektor des Transistors 7 ist weiterhin über einen Kondensator 10 und eine Diode 11 sowie über einen Widerstand 12 mit dem Eingang einer Diskriminatorschaltung 13 verbunden, an deren Ausgang 14 das Alarmsignal bereitgestellt wird. Der Verbindungspunkt zwischen der Diode 11 und dem Widerstand 12 ist mit einem Kondensator 15 verbunden, dessen anderer Anschluß an Masse liegt. Weiterhin ist der Verbindungspunkt zwischen dem Kondensator 10 und der Diode 11 mit der Kathode einer Diode 16 verbunden, der Anode an Masse liegt.

Die Sekundäreinheit der Alarmgeberanordnung weist einen sekundärseitigen Bandfilterkreis 20 mit parallel liegender Spule 21 und Kondensator 22 auf. Die Spule 4 des primärseitigen Bandfilterkreises 3 und die Spule 21 des sekundärseitigen Bandfilterkreises 20 sind miteinander zur Energie- und Signalübertragung induktiv gekoppelt. Der untere gemeinsame Verbindungspunkt zwischen der Spule 21 und dem Kondensator 22 des sekundärseitigen Bandfilterkreises 3 liegt an Masse, wogegen der gemeinsame obere Verbindungspunkt direkt mit dem Kollektor eines Transistors 23 und über einen Widerstand 24 mit dem Glasbruchmelder 2 und dem Eingang einer kombinierten Diskriminator- und Modulatorschaltung 25 verbunden ist. Der Emitter des Transistors 23 liegt an Masse, während die Basiselektrode über einen Widerstand 26 mit dem Ausgang der kombinierten Diskriminator- und Modulationsschaltung 25 verbunden ist. Die kombinierte Diskriminator- und Modulationsschaltung 25 erhält von einem Oszillator 27 Taktsignale zugeleitet.

Der Transistor 7 stellt dem primärseitigen Bandfilterkreis 3 des Bandfilters 1 entsprechend der Aussteuerfrequenz durch den Oszillator 9 der Primäreinheit Energie zur Verfügung, die über die induktive Kopplung von der Spule 4 des primärseitigen Bandfilterkreises 3 kontaktlos auf die Spule 21 des sekundärseitigen Bandfilterkreises 20 gelangt und der Detektoranordnung, hier dem Glasbruchmelder 2, zur Stromversorgung bereitgestellt wird.

Gleichzeitig dient das Bandfilter 1 auch als kontaktloser, induktiver Übertrager für die vom Glasbruchmelder 2 abgegebenen Signale. Dazu wird der sekundärseitige Bandfilterkreis 20 über den Transistor 23 periodisch kurzgeschlossen, wobei der Transistor von der kombinierten Diskriminator- und Modulatorschaltung 25 entsprechend der vom Oszillator 27 bereitgestellten Taktfolge abwechselnd in den leitenden und nicht leitenden Zustand versetzt wird.

Nach Übertragung des Signals über die induktiv gekoppelte Spule 21 des sekundärseitigen Bandfilterskreises 20 auf die Spule 4 des primärseitigen Bandfilterkreises 3 nach Art einer Modulation der primärseitig auftretenden Kollektorspannung gelangt das vom Glasbruchmelder 2 abgegebene Signal über ein aus den Kondensatoren 10 und 15, den Dioden 11 und 16 sowie dem Widerstand 12 bestehenden Schaltkreis auf einen Eingang des Diskriminators 13, in dem die Abtrennung und Auswertung des Signals in bekannter Weise vorgenommen wird.

In dem Falle der Verwendung des erfindungsgemäßen Übertragers mit einem Glasbruchmelder an Fenstern oder Türen ist die Spule 4 des primärseitigen Bandfilterkreises 3 in einer Fenster- oder Türzarge eingesetzt. Dagegen ist in diesem Anwendungsfall die Spule 21 des sekundärseitigen Bandfilterkreises 3 im Rahmen des Fenster- oder Türflügels so angeordnet, daß bei geschlossenem Fenster oder geschlossener Tür die beiden Spulen 4 und 21 des Bandfilters aneinander oder nahe aneinander liegen, so daß eine induktive Kopplung zwischen den Spulen auftritt. Die Spulen können nun parallel nebeneinander oder so angeordnet sein, daß ihre Stirnseiten einander zugewandt sind. Da in den Zargen und Rahmen wenig Platz für die Anbringung und das Einsetzen der Spulen vorhanden ist, ist eine Stirnseitenkopplung der Spulen 4 und 21 besonders vorteilhaft, weil dadurch ein geringer Raumbedarf besteht und keine Langloch- sondern eine Rundlochbohrung, die einfacher auszuführen ist, zum Einsetzen der Spulen 4 und/oder 21 ausreicht.

Fig. 2 zeigt eine ins einzelne gehende Ausführungsform des erfindungsgemäßen Übertragers, wie er im Zusammenhang mit einer Alarmgeberanordnung eingesetzt wird. Schaltungselemente und Bauteile, die denen von Fig. 1 entsprechen, sind in Fig. 2 mit denselben Bezugszeichen wie in Fig. 1 versehen und werden nicht nochmals beschrieben. An der positiven Anschlußklemme 6 liegen ein Kondensator 31, ein Widerstand 32, ein Kondensator 33 und ein Anschluß der Spule 4 des primärseitigen Bandfilterkreises 3. Der Kondensator 31 ist mit seinem anderen Anschluß geerdet. Der Widerstand 32 ist mit seinem der positiven Anschlußklemme 6 abgewandten Ende mit einem Widerstand 34, einem Kondensator 35 und der Basiselektrode des Transistors 7 verbunden. Die der Basiselektrode des Transistors 7 abgewandten Anschlüsse des Widerstands 34 und des Kondensators 35 liegen an Masse. Der der positiven Anschlußklemme 6 abgewandte Anschluß des Kondensators 33 ist mit einem weiteren Kondensator 36 verbunden, die zusammen den in Fig. 1 dargestellten Kondensator 5 bilden. Der dem Kondensator 33 abgewandte Anschluß des Kondensators 36 ist mit dem der positiven Anschlußklemme 6 abgewandten Anschluß der Spule 4 des primärseitigen Bandfilterkreises 3 verbunden, der seinerseits am Kollektor des Transistors 7 liegt. Der Verbindungspunkt zwischen den Kondensatoren 33 und 36 liegt am Emitter des Transistors 7 und über einen Widerstand 37 am Ausgang 14 für das Alarmsignal. Der Emitter des Transistors 7 liegt über den Emitterwiderstand 8 an Masse. Mit dem Ausgang 14 für das Alarmsignal ist weiterhin ein Kondensator 38 verbunden, dessen anderer Anschluß geerdet ist.

In der Sekundäreinheit ist der sekundärseitige Bandfilterkreis 20 mit der Spule 21 und dem Kondensator 22 mit einem positiven Anschluß 41 eines Verbrauchers, im vorliegenden Ausführungsbeispiel des Glasbruchmelders 2 und der andere Anschluß des sekundärseitigen Bandfilterkreises 20 über eine Diode 42 mit dem negativen Anschluß 43 des Verbrauchers verbunden. Die Anode der Diode 42 ist hierbei mit dem negativen Anschluß 43 und die Kathode derselben ist mit dem sekundärseitigen Bandfilterkreis 20 verbunden. Der Anschluß des sekundärseitigen Bandfilterkreises 20 ist weiterhin mit der Anode einer Diode 44 verbunden, deren Kathode am Kollektor des Transistors 23 liegt, dessen Emitter mit dem positiven Anschluß 41 und dessen Basiselektrode mit dem Ausgang eines Impulsgenerators 45 in Verbindung steht. Die Energieversorgung des Impulsgenerators 45 wird vom sekundärseitigen Bandfilterkreis 20 bereitgestellt. Der Impulsgenerator 45 wird vom Verbraucher, im vorliegenden Ausführungsbeispiel vom Glasbruchmelder 2, angesteuert. Zwischen dem positiven und negativem Anschluß 41 bzw. 43 liegt ein Kondensator 46.

Der in Fig. 1 dargestellte Oszillator 9 der Primäreinheit besteht aus den in Fig. 2 dargestellten Bauelementen 31 bis 36, 4 und 7. Er schaltet den Transistor 7 beispielsweise mit einer Frequenz von 145 kHz, so daß die auf die Sekundäreinheit zu übertragende Energie in der bereits in Fig. 1 beschriebenen Weise über das Bandfilter 1 bzw. deren Bandfilterspulen 4 und 21 induktiv übergeben wird. Nach Gleichrichtung durch die Diode 42 und Glättung durch den Kondensator 46 in der Sekundäreinheit wird die Versorgungsspannung über die Anschlüsse 41 und 43 einem Verbraucher, im vorliegenden Fall dem Glasbruchmelder 2 bereitgestellt.

In dem in Fig. 2 dargestellten Ausführungsbeispiel ist der primärseitige Bandfilterkreis 3 als frequenzbestimmender Kreis in der selbsterregenden Oszillatorschaltung aufgenommen. Dadurch ist die Ausgangsspannung am Sekundärkreis in Abhängigkeit von der kritischen bis überkritischen Kopplung zwar nicht mehr konstant, dies kann jedoch in vielen Anwendungsfällen zu Gunsten einer einfachen Schaltungsanordnung in Kauf genommen werden.

Bei geeigneter Dimensionierung des Oszillators wird dieser versuchen, bei Bedämpfung durch den sekundärseitigen Bandfilterkreis 20 seine Schwingungsamplitude konstant zu halten. Dies wird er so lange tun, bis die Bedämpfung des primärseitigen Bandfilterkreises 3 eine Aufrechterhaltung der Schleifenverstärkung von 1 nicht mehr erlaubt. In diesem Moment bricht die Schwingung ab. Im vorliegenden Ausführungsbeispiel wird die Schaltungsanordnung allerdings vorzugsweise so dimensioniert, daß die Schwingung nicht abreißt.

Vorteilhafterweise ist der Transistor 7, der als Oszillatortransistor dient, durch Mitkopplung spannungsgesteuert. Die Spannungssteuerung hat gegenüber der Stromsteuerung Vorteile. Bei der Stromsteuerung geht nämlich die große Streuung der Stromverstärkung einzelner Transistoren in die Schleifenverstärkung ein. Dagegen ist bei einer Spannungssteuerung die Steilheit - von den Basis- und Emitterbahnwiderständen einmal abgesehen - im interessierenden Bereich vom Emitterstrom nur linear abhängig.

Durch die periodische Schaltung des Transistors 23 in der Sekundäreinheit mit den vom Impulsgenerator 45 bereitgestellten Impulsen wird der sekundärseitige Bandfilterkreis 20 periodisch kurzgeschlossen, wie dies bereits im Zusammenhang mit Fig. 1 beschrieben wurde. Der spannungsgesteuerte Oszillator hält die Schwingung durch die emitterstromabhängige Veränderung seiner Steilheit aufrecht. Dies erzielt er durch Gleichrichtung an seiner Basis-Emitterdiode, wodurch sich der Arbeitspunkt verschiebt. Wird nun der primärseitige Bandfilterkreis 3 durch periodisches Abschalten der angekoppelten Bedämpfung be- oder entlastet, wird sich der Oszillatorstrom durch die genannte Selbstregelung entsprechend periodisch verändern.

Über einen einfachen, aus dem Widerstand 37 und dem Kondensator 38 bestehenden RC-Tiefpaß kann diese periodische Bedämpfung, die als Modulation angesehen werden kann, zum Beispiel am Emitter des Transistors 7 ausgekoppelt, und über den Ausgang 14 einer (nicht dargestellten) Auswerteschaltung bereitgestellt werden.

Am Ausgang 14 für das Alarmsignal treten drei unterschiedliche Signalkriterien auf, die in Fig. 3 dargestellt sind: Ist die Türe oder das Fenster offen, liegt am Ausgang 14 eine Ausgangsspannung von ca. 0,2 V an. Ist dagegen die Türe oder das Fenster geschlossen, liegt am Ausgang 14 eine Spannung von ca. 0,3 V an. Meldet der Glasbruchmelder 2 dagegen einen Glasbruch, so ergibt sich ein impulsförmiges Alarmsignal.

Die Auswertung der genannten drei Signale kann in üblicher Weise durchgeführt werden, sodaß hierauf nicht weiter eingegangen zu werden braucht.

Der Impulsgenerator 45 der Sekundäreinheit weist ebenfalls einen üblichen Aufbau auf, so daß er hier nicht im einzelnen beschrieben werden muß. Als Modulator für den sekundärseitigen periodischen Kurzschluß kann ein bipolarer Transistor, wie dies in den Figuren dargestellt ist, aber auch ein Feldeffekttransistor verwendet werden.

Bei dem in Fig. 2 dargestellten Ausführungsbeispiel haben die Bauelemente folgende Werte: Kondensator 31 = 2,2 $\mu$F, Widerstand 32 = 100 kOhm, Kondensator 33 = 220 nF, Widerstand 34 = 10 kOhm, Kondensator 35 = 0,1 $\mu$F, Kondensator 36 = 6,8 nF, Widerstand 37 = 22 kOhm, Kondensator 38 = 10 nF, Emitterwiderstand 8 = 470 Ohm, Kondensator 22 = 6,8 nF, Kondensator 46 = 1 $\mu$F. Als Transistoren 7 und 23 wurden die Transistortypen BC 548 verwendet. Die Spulen 4 und 21 des Bandfilters 1 weisen 150 Windungen auf (10 x 0,07 CulS).

Die Erfindung wurde anhand bevorzugter Ausführungsbeispiele beschrieben. Dem Fachmann sind jedoch zahlreiche Abwandlungen und Ausgestaltungen möglich, ohne daß dadurch der Erfindungsgedanke verlassen wird. Beispielsweise läßt sich das Prinzip des erfindungsgemäßen Übertragungsverfahrens ganz allgemein bei der kontaktlosen, induktiven Übertragung zwischen einem Empfänger und einem Sender bei gleichzeitiger kontaktloser Energieübertragung an den Sender anwenden.

**Patentansprüche**

1. Verfahren zum kontaktlosen, induktiven Übertragen sowohl elektrischer Versorgungsenergien von einer Primäreinheit zu einer Sekundäreinheit als auch von Signalen von der Sekundäreinheit zur Primäreinheit mittels eines Bandfilters, dadurch **gekennzeichnet, daß** das Bandfilter sekundärseitig periodisch kurzgeschlossen wird.

2. Verfahren nach Anspruch 1, dadurch gekennzeichnet, daß die Taktfrequenz des periodischen Kurzschließens bezüglich der Übertragungsfrequenz klein ist.

3. Verfahren nach Anspruch 1 oder 2, dadurch gekennzeichnet, daß das periodische Kurzschließen mit einem unsymmetrischen Tastverhältnis erfolgt.

4. Verfahren nach einem der vorhergehenden Ansprüche, dadurch gekennzeichnet, daß die Schwingung in der primärseitigen Oszillatorschaltung während des Kurzschließens nicht abreißt.

5. Kontaktloser, induktiver Übertrager zur Durchführung des Verfahrens nach einem der Ansprüche 1 bis 4, dadurch **gekennzeichnet,** daß die Sekundäreinheit eine Schaltungsanordnung zum periodischen Kurzschließen des Bandfilters (1) aufweist.

6. Übertrager nach Anspruch 5, dadurch gekennzeichnet, daß die Schaltungsanordnung zum periodischen Kurzschließen des Bandfilters (1) eine Modulatorschaltung ist.

7. Übertrager nach Anspruch 5 oder 6, dadurch gekennzeichnet, daß der primärseitige Bandfilterkreis (3) des Bandfilters (1) Teil einer selbsterregenden Oszillatorschaltung (9) in der Primäreinheit ist.

8. Übertrager nach einem der Ansprüche 5 bis 7, dadurch gekennzeichnet, daß vorwiegend der primärstufige Bandfilterkreis (3) des Bandfilters (1) für die Oszillatorschaltung (9) frequenzbestimmend ist.

9. Übertrager nach einem der Ansprüche 5 bis 8, dadurch gekennzeichnet, daß die Oszillatorschaltung (9) spannungsgesteuert ist.

10. Übertrager nach einem der Ansprüche 5 bis 9, gekennzeichnet durch die Verwendung in einer Alarmgeberanordnung.

11. Übertrager nach Anspruch 10, dadurch gekennzeichnet, daß die Primäreinheit eine Energieversorgungsschaltung und/oder eine Signalauswerteschaltung und die Sekundäreinheit einen Alarmgeber (2) umfaßt.

12. Übertrager nach Anspruch 10 oder 11, dadurch gekennzeichnet, daß der Alarmgeber (2) ein Glasbruchmelder ist.

13. Übertrager nach einem der Ansprüche 5 bis 12, dadurch gekennzeichnet, daß die Spulen (4 bzw. 21) der Bandfilterkreise (3 bzw. 22) des Bandfilters (1) mit ihren Stirnseiten gekoppelt sind.

Fig.1

Fig.2

Fig.3